# EUROPÄISCHE PATENTSCHRIFT

(11) **EP 4 424 498 B1**
(45) Veröffentlichungstag und Bekanntmachung des Hinweises auf die Patenterteilung: **26.08.2026**
(21) Anmeldenummer: 23159536.4
(22) Anmeldetag: 02.03.2023
(51) Int. Cl.: B29C 65/14, B29C 65/18, B29C 65/00, B29C 65/20

(54) **TROCKNUNGSVERFAHREN**
DRYING PROCESS
PROCÉDÉ DE SÉCHAGE

(43) Veröffentlichungstag der Anmeldung: 04.09.2024
(73) Patentinhaber: Georg Fischer Rohrleitungssysteme AG, 8201 Schaffhausen (CH)
(72) Erfinder: Hasific, Edin, 8200 Schaffhausen (CH); Roesch, Juergen, 79853 Lenzkirch (DE); Gutierrez, Mariano, 8280 Kreuzlingen (CH); Engesser, Benedikt, 78073 Hochemmingen (DE)
(74) Vertreter: Fenner, Seraina

(56) Entgegenhaltungen:
- WO-A1-2016/102291
- JP-A- H08 156 102
- US-A- 5 241 157

## Beschreibung

Verfahren zum Verschweissen von hygroskopischen Kunststoffteilen vorzugsweise Rohrleitungskomponenten mittels einer Stumpfschweissmaschine, wobei die beiden Kunststoffteile in koaxialer Lage zueinander mittels Spannvorrichtung eingespannt und fixiert werden, wobei die sich gegenüberliegenden Stirnseiten der Kunststoffteile mittels eines dazwischen bringbaren Hobels plangehobelt werden und die Kunststoffteilenden mittels eines dazwischen bringbaren Heizspiegels aufgeschmolzen werden, wobei der Heizspiegel mit einem Abstand zu den Stirnseiten der Kunststoffteilenden angeordnet wird, um die benötigte Wärme zum Aufschmelzen zu erreichen, wobei anschliessend an das Aufschmelzen, die Kunststoffteilenden zusammengefügt werden.

Aus dem Stand der Technik sind solche Verfahren zum Verschweissen von Kunststoffteilen bekannt jedoch werden dazu thermoplastische Kunststoffe verwendet, die nicht hygroskopisch sind.

Die US 5 241 157 A, JP H08 156102 A und WO 2016/102291 A1 offenbaren herkömmliche Schweissverfahren bei denen die Rohre nicht zuvor getrocknet werden müssen.

Die EP 0 899 083 offenbart ein erfindungsgemässes Verfahren, jedoch würde sich dieses für hygroskopische Kunststoffe nicht eignen, ausser es würde vorher eine Trocknung der Kunststoffteile erfolgen. Aus dem Stand der Technik ist bekannt, dass eine solche Trocknung als separater vorgängiger zusätzlicher Arbeitsschritt durchgeführt wird, meist in einem Wärmeschrank, um sicherzustellen, dass der Kunststoff keine bzw. kaum noch Feuchtigkeit enthält, denn diese würde bei einer Schweissung Feuchtigkeitsblasen hervorrufen. Dies erfordert entsprechend einen hohen zeitlichen wie energieintensiven Aufwand um hygroskopische Kunststoffteile miteinander verschweissen zu können.

Es ist Aufgabe der Erfindung ein Verfahren vorzuschlagen, das ermöglicht hygroskopische Kunststoffteile miteinander zu verschweissen, ohne dass vorab eine separate Trocknung der Kunststoffteile erfolgen muss um das Kunststoffteil zu entfeuchten.

Diese Aufgabe wird erfindungsgemäss dadurch gelöst, dass eine Trocknung der Kunststoffteilenden während der Fixierung auf der Stumpfschweissung erfolgt, wobei die Trocknung mittels des zwischen den Kunststoffteilenden angeordneten Heizspiegels durchgeführt wird.

Beim erfindungsgemässen Verfahren zum Verschweissen von hygroskopischen Kunststoffteilen vorzugsweise Rohrleitungskomponenten mittels einer Stumpfschweissmaschine werden die beiden Kunststoffteile in koaxialer Lage zueinander mittels Spannvorrichtung eingespannt und fixiert. Die fixierten Kunststoffteile lassen sich mittels der Spannvorrichtung axial verschieben, um die verschiedenen Positionen während des Schweissverfahrens anzufahren. Vorzugsweise liegt dazu ein Antrieb und eine Steuerung vor, die den Schweissprozess entsprechend den angegebenen Daten durchführt. Als Rohrleitungskomponente werden vorzugsweise Fittings und/oder Rohre untereinander bzw. miteinander verschweisst. Nach dem Einspannen bzw. Fixieren der Kunststoffteile, vorzugsweise mit den Spannvorrichtungen der Stumpfschweissmaschine, werden die sich gegenüberliegenden Stirnseiten der Kunststoffteile mittels eines dazwischen bringbaren Hobels plangehobelt. Vorzugsweise werden die Kunststoffteilenden auf ein bestimmtes Mass gehobelt, so dass die Stirnseiten einen Nullpunkt definieren.

Die gehobelten Kunststoffteilenden werden dann mittels eines dazwischen bringbaren Heizspiegels aufgeschmolzen, welcher anstelle des Hobels zwischen den Kunststoffteilen angeordnet wird.

Der Heizspiegel wird mit einem Abstand zu den Stirnseiten der Kunststoffteilenden angeordnet, um die benötigte Wärme zum Aufschmelzen zu erreichen. Das erfindungsgemässe Schweissverfahren wird vorzugsweise mittels einem Infrarotheizspiegel durchgeführt und ist entsprechend kontaktlos, das heisst, die Wärme auf die Kunststoffteilenden erfolgt durch die Wärmestrahlung und die Konvektion.

Anschliessend an das Aufschmelzen werden die Kunststoffteilenden zusammengefügt nachdem der Heizspiegel dazwischen entfernt wurde.

Um eine den Anforderungen entsprechende Schweissnaht zu erzielen ist sicherzustellen, dass das Kunststoffteil kein oder keine zu hohe Feuchtigkeit aufweist. Beim erfindungsgemässen Verfahren wird die Feuchtigkeit im hygroskopischen Kunststoffteile extrahiert, so dass sich keine Feuchtigkeit oder zumindest nur noch so wenig Feuchtigkeit darin befindet, dass eine den Anforderungen entsprechende Schweissnaht erzielt werden kann. Dazu wird eine Trocknung der Kunststoffteilenden während der Fixierung auf der Stumpfschweissmaschine durchgeführt, wobei die Trocknung mittels des zwischen den Kunststoffteilenden angeordneten Heizspiegels umgesetzt wird. Durch die Wärmestrahlung des Heizspiegels und die vorherrschende Konvektion wird erreicht, dass die Schweisszonen der Kunststoffteilenden entsprechend getrocknet werden. Dadurch, dass ausschliesslich die Schweisszonen getrocknet werden und nicht das komplette Kunststoffteil kann eine Menge an Energie eingespart werden.

Vorzugsweise erfolgt die Trocknung der Kunststoffteilenden nach dem Hobeln. Nach dem Hobeln sind die Kunststoffteilenden auf ein exaktes Mass gebracht, wodurch die genaue Position der Stirnseiten bekannt ist und der Abstand zwischen den Stirnseiten und dem Heizspiegel kann genau definiert werden, wodurch die übertragene Wärme zur Trocknung über den Abstand geregelt werden kann. Zudem wird durch ein vorab Überhobeln vermieden, dass Energie zum Trocknen aufgewendet wird, für Material das danach abgehobelt wird.

Als bevorzugte Ausführungsform hat sich gezeigt, wenn zur Trocknung die Stirnseiten der Kunststoffteile in einem grösseren Abstand zum Heizspiegel angeordnet werden als beim Aufschmelzen. Dadurch ist die vorherrschende Temperatur am Kunststoffteilende tiefer als bei der Aufschmelzung ohne die Temperatur am Heizspiegel zu regulieren.

Es ist vorteilhaft, dass die Trocknung vor der Aufschmelzung der Kunststoffteilenden erfolgt. Damit sich keine Feuchtigkeitsblasen bei der Aufschmelzung der Kunststoffteilenden ergeben ist es vorteilhaft wenn die Feuchtigkeit zuvor durch die Trocknung den Kunststoffteilenden entzogen wird.

Vorzugsweise wird die Trocknung dynamisch durchgeführt und der Abstand zwischen den Stirnseiten der Kunststoffteile und dem Heizspiegel abhängig von der am Kunststoffteilende bzw. der Schweisszone vorherrschenden Temperatur geregelt. Dadurch wird eine rasche Anpassung der Temperatur am Kunststoffteilende erreicht und optimale Trocknungsbedingungen sind gewährleistet. Vorzugsweise wird die Zeit ebenfalls entsprechend geregelt. Es hat sich als vorteilhaft gezeigt, wenn der Steuerung die Daten für die entsprechenden Kunststoffteile hinterlegt sind, wodurch das Verfahren autonom bei Erkennung der Kunststoffteile durchgeführt wird. Das heisst, vorzugsweise heizt der Heizspeigel auf eine vordefinierte Temperatur auf und die Abstände werden entsprechend den Verfahrensschritten sowie die Verweildauer an der entsprechend Positionen der Kunststoffteile durchgeführt.

Als vorteilhaft hat sich gezeigt, dass während der Trocknung keine Aufschmelzung der Kunststoffteilenden erfolgt. Dies verhindert, dass Feuchtigkeitsblasen entstehen, denn dann würde eine Aufschmelzung ohne vorhergehende Trocknung erfolgen. Somit herrschen am Kunststoffteilende während der Trocknung tiefere Temperaturen als bei der Aufschmelzung. Vorzugsweise liegen die Trocknungstemperaturen am Kunststoffteilende unter den eigentlichen Schmelztemperaturen des entsprechenden Kunststoffs.

Es ist vorteilhaft, wenn zur Bestimmung des Abstands nach dem Hobeln eine Nullpunktprüfung der Kunststoffteilenden durchgeführt wird. Dies dient dazu, dass die Position der Stirnseiten genau ermittelt und so der Abstand genau eingestellt werden kann.

Als vorteilhaft hat sich gezeigt, wenn die Temperatur des Heizspiegels während der Trocknung konstant gehalten wird. Die Trocknungstemperatur wird über den Abstand zwischen Stirnseite der Kunststoffteile und Heizspiegel geregelt. Vorzugsweise werden die vorherrschenden Temperaturen an der Schweisszone des Kunststoffteils mittels Sensor überwacht und entsprechend geregelt mit der Einstellung des Abstands.

Vorzugsweise wird die Temperatur des Heizspiegels während des kompletten Schweissvorgangs konstant gehalten. Da eine Temperaturveränderung am Heizspiegel träge ist werden vorzugsweise andere Parameter wie Abstand und Zeit verändert um den Schweissprozess zu optimieren.

Als vorteilhaft hat sich auch gezeigt, dass zur Ermittlung ob den Kunststoffteilen genügend Feuchtigkeit entzogen wurde, das Gewicht des Kunststoffteils nach dem Trocknen ermittelt wird bzw. das Gewicht vor und nach dem Trocknen ermittelt wird und diese beiden Werte miteinander verglichen werden. Alternativ besteht auch die Möglichkeit mittels eines Feuchtigkeitssensor die Schweisszone zu überprüfen wie hoch der Feuchtigkeitsgehalt ist.

Alle Ausgestaltungmöglichkeiten sind untereinander frei kombinierbar.

Ein Ausführungsbeispiel der Erfindung wird anhand der Figur beschrieben, wobei sich die Erfindung nicht nur auf das Ausführungsbeispiel beschränkt. Es zeigt:

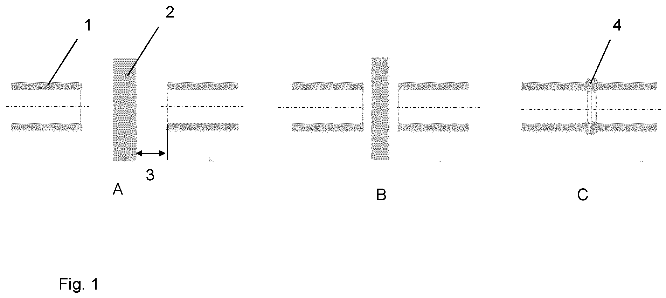

- Fig. 1: eine schematische Darstellung des Ablaufs des erfindungsgemässen Schweissverfahrens.

Die in Fig. 1 dargestellte Zeichnung zeigt eine schematische Darstellung des erfindungsgemässen Verfahren zum Verschweissen von hygroskopischen Kunststoffteilen 1, vorzugsweise Rohrleitungskomponenten. Unter Rohrleitungskomponenten sind neben Rohrleitungen auch Fittings und weitere Komponenten zu verstehen, die zusammen auf einer Stumpfschweissmaschine miteinander verschweisst werden können. In Fig. 1 werden die unterschiedlichen Schritte des Verfahrens nach dem Hobeln aufgezeigt. Abbildung A zeigt schematisch die Anordnung der Kunststoffteile 1 gegenüber des Heizspiegels 2 während des Verfahrensschritt der Trocknung auf. Gut ersichtlich ist, dass die Kunststoffteilenden 1 eine Distanz 3 zum Heizspiegel aufweisen, die deutlich grösser ist als während des anschliessenden Verfahrensschritts des Aufschmelzens B. In Abbildung B ist ersichtlich, dass die Distanz 3 reduziert wurde, damit eine höhere Temperatur an den Kunststoffteilenden bzw. in der Schweisszone generiert wird indem die Kunststoffteilenden 1 näher an den Heizspiegel 2 verschoben werden. Da die Trocknung dynamisch ist wird mittels Veränderung des Abstands 3 während der Trocknungsphase die Temperatur in der Schweisszone geregelt um eine optimale Trocknung zu erzielen und ein Aufschmelzen zu vermeiden. Abbildung C zeigt die Position in der die aufgeschmolzenen Kunststoffteilenden nach entfernen des Heizspiegels zusammengefügt wurden und sich eine Schweissnaht 4 bildet.

### Bezugszeichenliste

- 1: Kunststoffteile / Kunststoffteilende
- 2: Heizspiegel
- 3: Abstand
- 4: Schweissnaht

## Patentansprüche

1. Verfahren zum Verschweissen von hygroskopischen Kunststoffteilen (1) vorzugsweise Rohrleitungskomponenten mittels einer
Stumpfschweissmaschine, wobei die beiden Kunststoffteile (1) in koaxialer Lage zueinander mittels Spannvorrichtung eingespannt und fixiert werden, wobei die sich gegenüberliegenden Stirnseiten der Kunststoffteile (1) mittels eines dazwischen bringbaren Hobels plangehobelt werden und die Kunststoffteilenden (1) mittels eines dazwischen bringbaren Heizspiegels (2) aufgeschmolzen werden, wobei der Heizspiegel (2) mit einem Abstand (3) zu den Stirnseiten der Kunststoffteilenden (1) angeordnet wird, um die benötigte Wärme zum Aufschmelzen zu erreichen, wobei anschliessend an das Aufschmelzen, die Kunststoffteilenden (1) zusammengefügt werden, wobei eine Trocknung der Kunststoffteilenden (1) während der Fixierung auf der Stumpfschweissmaschine erfolgt, wobei die Trocknung mittels des zwischen den Kunststoffteilenden (1) angeordneten Heizspiegels (2) durchgeführt wird, **dadurch gekennzeichnet, dass** zur Trocknung die Stirnseiten der Kunststoffteile (1) in einen grösseren Abstand (3) zum Heizspiegel (2) angeordnet werden als beim Aufschmelzen.

2. Verfahren nach Anspruch 1, **dadurch gekennzeichnet, dass** die Trocknung der Kunststoffteilenden (1) nach dem Hobeln erfolgt.

3. Verfahren nach einem der Ansprüche 1 bis 2, **dadurch gekennzeichnet, dass** die Trocknung der Kunststoffteilenden vor dem Aufschmelzen erfolgt.

4. Verfahren nach einem der Ansprüche 1 bis 3, **dadurch gekennzeichnet, dass** die Trocknung dynamisch durchgeführt und der Abstand zwischen den Stirnseiten der Kunststoffteile (1) und dem Heizspiegel (2) abhängig von der am Kunststoffteilende (1) bzw. der Schweisszone vorherrschenden Temperatur geregelt wird.

5. Verfahren nach einem der Ansprüche 1 bis 4, **dadurch gekennzeichnet, dass** während der Trocknung keine Aufschmelzung der Kunststoffteilenden (1) erfolgt.

6. Verfahren nach einem der Ansprüche 1 oder 5, **dadurch gekennzeichnet, dass** zur Bestimmung des Abstands (3) nach dem Hobeln eine Nullpunktprüfung der Kunststoffteilenden (1) durchgeführt wird.

7. Verfahren nach einem der Ansprüche 1 oder 6, **dadurch gekennzeichnet, dass** die Temperatur des Heizspiegels (2) während der Trocknung konstant gehalten wird.

8. Verfahren nach einem der Ansprüche 1 oder 7, **dadurch gekennzeichnet, dass** die Temperatur des Heizspiegels (2) während des kompletten Schweissvorgangs konstant gehalten wird.

## Claims

1. Method for welding hygroscopic plastics parts (1), preferably pipeline components, by means of a butt-welding machine, wherein the two plastics parts (1) are clamped and fixed in a coaxial position in relation to one another by means of a clamping device, wherein the mutually opposite end faces of the plastics parts (1) are planed flat by means of a planer which can be brought in between them, and the ends of the plastics parts (1) are melted by means of a heating mirror (2) that can be brought between them, wherein the heating mirror (2) is disposed at a spacing (3) from the end faces of the ends of the plastics parts (1), in order to achieve the required heat for the melting operation, wherein the ends of the plastics parts (1) are joined together after the melting operation, wherein the ends of the plastics parts (1) are dried while the plastics parts are being fixed on the butt-welding machine, wherein the drying is performed by the heating mirror (2) disposed between the ends of the plastics parts (1), **characterized in that** the end faces of the plastics parts (1) are disposed at a greater spacing (3) from the heating mirror (2) for the drying than they are during the melting operation.

2. Method according to Claim 1, **characterized in that** the ends of the plastics parts (1) are dried after the planing operation.

3. Method according to either of Claims 1 and 2, **characterized in that** the ends of the plastics parts are dried before the melting operation.

4. Method according to one of Claims 1 to 3, **characterized in that** the drying is carried out dynamically and the spacing between the end faces of the plastics parts (1) and the heating mirror (2) is regulated depending on the temperature prevailing at the end of the plastics parts (1), or the welding zone.

5. Method according to one of Claims 1 to 4, **characterized in that** the ends of the plastics parts (1) are not melted during the drying.

6. Method according to either of Claims 1 and 5, **characterized in that**, to determine the spacing (3) after the planing operation, a zero-point check of the ends of the plastics parts (1) is performed.

7. Method according to either of Claims 1 and 6, **characterized in that** the temperature of the heating mirror (2) is kept constant during the drying.

8. Method according to either of Claims 1 and 7, **characterized in that** the temperature of the heating mirror (2) is kept constant throughout the welding operation.

## Revendications

1. Procédé de soudage de pièces en matière plastique hygroscopique (1), de préférence de composants de conduites, au moyen d'une machine de soudage bout à bout, les deux pièces en matière plastique (1) étant serrées et fixées en position coaxiale l'une par rapport à l'autre au moyen d'un dispositif de serrage, les faces d'extrémité opposées des pièces en matière plastique (1) étant dressées au moyen d'un rabot pouvant être introduit entre celles-ci et les extrémités des pièces en matière plastique (1) étant fondues au moyen d'un miroir chauffant (2) pouvant être introduit entre celles-ci, le miroir chauffant (2) étant disposé à une distance (3) des faces d'extrémité des extrémités des pièces en matière plastique (1) afin d'atteindre la chaleur nécessaire à la fusion, après la fusion, les extrémités des pièces en matière plastique (1) étant assemblées, un séchage des extrémités des pièces en matière plastique (1) étant effectué pendant la fixation sur la machine de soudage bout à bout, le séchage étant réalisé au moyen du miroir chauffant (2) disposé entre les extrémités des pièces en matière plastique (1), **caractérisé en ce que**, pour le séchage, les faces d'extrémité des pièces en matière plastique (1) sont disposées à une distance (3) plus grande du miroir chauffant (2) que lors de la fusion.

2. Procédé selon la revendication 1, **caractérisé en ce que** le séchage des extrémités des pièces en matière plastique (1) est effectué après le rabotage.

3. Procédé selon l'une quelconque des revendications 1 à 2, **caractérisé en ce que** le séchage des extrémités des pièces en matière plastique est effectué avant la fusion.

4. Procédé selon l'une quelconque des revendications 1 à 3, **caractérisé en ce que** le séchage est réalisé de manière dynamique et la distance entre les faces d'extrémité des pièces en matière plastique (1) et le miroir chauffant (2) est réglée en fonction de la température régnant au niveau de l'extrémité de la pièce en matière plastique (1) ou de la zone de soudage.

5. Procédé selon l'une quelconque des revendications 1 à 4, **caractérisé en ce que**, pendant le séchage, aucune fusion des extrémités des pièces en matière plastique (1) n'a lieu.

6. Procédé selon l'une quelconque des revendications 1 ou 5, **caractérisé en ce que**, pour la détermination de la distance (3) après le rabotage, un contrôle du point zéro des extrémités des pièces en matière plastique (1) est effectué.

7. Procédé selon l'une quelconque des revendications 1 ou 6, **caractérisé en ce que** la température du miroir chauffant (2) est maintenue constante pendant le séchage.

8. Procédé selon l'une quelconque des revendications 1 ou 7, **caractérisé en ce que** la température du miroir chauffant (2) est maintenue constante pendant l'ensemble du processus de soudage.
